(19) Europäisches Patentamt
European Patent Office
Office européen des brevets

(11) **EP 4 574 464 A1**

(12) **EUROPEAN PATENT APPLICATION**

(43) Date of publication:
**25.06.2025 Bulletin 2025/26**

(21) Application number: 23218247.7

(22) Date of filing: **19.12.2023**

(51) International Patent Classification (IPC):
**B60C 11/24** (2006.01)          **B60W 40/101** (2012.01)

(52) Cooperative Patent Classification (CPC):
**B60C 11/246**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **ERDINC, Umur**
**413 26 GÖTEBORG (SE)**
• **BALIGA, Nikhil**
**413 02 GÖTEBORG (SE)**

(74) Representative: **Ström & Gulliksson AB**
**P.O. Box 4188**
**203 13 Malmö (SE)**

Remarks:
Amended claims in accordance with Rule 137(2) EPC.

(54) **TYRE WEAR DETERMINATION**

(57)     A computer system for determining a difference in tyre wear between a first operating point of a vehicle and a second operating point of a vehicle, the computer system comprising processing circuitry configured to acquire a first lateral tyre force for at least one wheel of the vehicle associated with the first operating point, acquire a second lateral tyre force for at least one wheel of the vehicle associated with the second operating point, compare the first lateral tyre force and the second lateral tyre force, and upon there being a difference between the first lateral tyre force and the second lateral tyre force, determine that a tyre wear associated with the first operating point is different from a tyre wear associated with the second operating point, wherein a slip angle of the at least one wheel associated with the first operating point is substantially the same as a slip angle of the at least one wheel associated with the second operating point.

FIG. 2

EP 4 574 464 A1

**Description**

**TECHNICAL FIELD**

The disclosure relates generally to vehicle operation. In particular aspects, the disclosure relates to tyre wear determination. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

In vehicle operations, friction between the tyres of a vehicle and the surface on which the vehicle is travelling is crucial to safe transport. One factor that affects such friction is tyre wear. Tyre wear can be estimated using sensors embedded in the tyres, or by an operator physically measuring the tread depth of the tyre at certain intervals. However, these approaches are cumbersome and require extra infrastructure or equipment, especially if the tyre wear is to be monitored at regular intervals.

It is therefore desired to develop a solution for determining tyre wear for a vehicle that addresses or at least mitigates some of these issues.

**SUMMARY**

This disclosure attempts to address the problems noted above by providing systems, methods and other approaches for determining a difference in tyre wear between a first operating point of a vehicle and a second operating point of a vehicle by comparing lateral tyre forces. This enables a change in tyre wear to be determined and taken into account when controlling vehicles, for example by adjusting the velocity or the tyre pressure of the vehicle appropriately to ensure safe and efficient operation of the vehicle. This is particularly useful for autonomous vehicles or vehicles that travel the same route repeatedly.

According to a first aspect of the disclosure, there is provided a computer system for determining a difference in tyre wear between a first operating point of a vehicle and a second operating point of a vehicle, the computer system comprising processing circuitry configured to acquire a first lateral tyre force for at least one wheel of the vehicle associated with the first operating point, acquire a second lateral tyre force for at least one wheel of the vehicle associated with the second operating point, compare the first lateral tyre force and the second lateral tyre force, and upon there being a difference between the first lateral tyre force and the second lateral tyre force, determine that a tyre wear associated with the first operating point is different from a tyre wear associated with the second operating point, wherein a slip angle of the at least one wheel associated with the first operating point is substantially the same as a slip angle of the at least one wheel associated with the second operating point.

The first aspect of the disclosure may seek to provide a solution for determining a difference in tyre wear between different operating points. A technical benefit may include the indication of a change in tyre wear from past or expected values, which can enable operation of vehicle to be adjusted according to the determined tyre wear. Further technical benefits may include streamlining of operations by eliminating the need for additional infrastructure or equipment, such as embedded tyre sensors, thereby providing a more efficient and user-friendly alternative to cumbersome prior art approaches.

Optionally in some examples, including in at least one preferred example, the slip angle of the at least one wheel associated with the first operating point is within a threshold of the slip angle of the at least one wheel associated with the second operating point. A technical benefit may include providing a simple and reliable way of ensuring a robust comparison between the different operating points.

Optionally in some examples, including in at least one preferred example, at least one of a mass $m$ of the vehicle, a longitudinal velocity $v_x$ of the vehicle, a lateral velocity $v_y$ of the vehicle, a lateral acceleration $a_y$ of the vehicle, a tyre type, a tyre pressure $p$, an ambient temperature $T$, and/or road friction $\mu$ is substantially constant between the first operating point and the second operating point. A technical benefit may include ensuring a robust comparison between the different operating points, meaning that the likelihood of erroneous determinations is reduced.

Optionally in some examples, including in at least one preferred example, the first operating point and the second operating point are associated with the same section of a route. A technical benefit may include the determination of a change of tyre wear based on the same or similar travel conditions, enabling a more robust comparison between the different operating points to be performed.

Optionally in some examples, including in at least one preferred example, the first operating point and the second operating point correspond to a curved path. A technical benefit may include that stronger lateral tyre forces are present meaning a more robust comparison between the different operating points can be performed.

Optionally in some examples, including in at least one preferred example, the first operating point corresponds to a left side wheel of a vehicle, and the second operating point corresponds to a right side wheel of the vehicle. A technical benefit may include the determination of a difference between different tyres of the same vehicle, enabling operational parameters of the vehicle, such as the velocity or the tyre pressure, to be adjusted accordingly.

Optionally in some examples, including in at least one preferred example, the first operating point corresponds to a first time, and the second operating point corresponds to a second time later than the first time. A technical benefit may include the determination of a change of tyre wear over time, enabling the performance of the tyre over its lifetime to be assessed.

Optionally in some examples, including in at least one preferred example, the processing circuitry is configured to receive the first lateral tyre force and/or the second lateral tyre force from a tyre force estimator. A technical benefit may include that an accurate estimate of the tyre forces is provided from existing infrastructure of the vehicle, enabling an accurate determination of a difference in tyre wear.

Optionally in some examples, including in at least one preferred example, the processing circuitry is further configured to process acquired data such that the slip angle of the at least one wheel associated with the first operating point is substantially the same as slip angle of the at least one wheel associated with the second operating point. A technical benefit may include enabling the use of data that would otherwise not be useful for comparison between different operating points.

Optionally in some examples, including in at least one preferred example, the processing circuitry is further configured to determine that the tyre wear associated with the first operating point is higher than the tyre wear associated with the second operating point if the first lateral tyre force is larger than the second lateral tyre force. A technical benefit may include the determination of how the tyre wear is changing, which enables maintenance planning to be handled accordingly.

Optionally in some examples, including in at least one preferred example, the processing circuitry is further configured to adjust the velocity of a vehicle or the tyre pressure of a wheel based on a determination that the tyre wear associated with the first operating point is different from the tyre wear associated with the second operating point. A technical benefit may include that operation of vehicle can be adjusted according to the determined tyre wear.

According to a second aspect of the disclosure, there is provided a vehicle comprising the computer system of the first aspect. The second aspect of the disclosure may seek to provide a vehicle capable of determining a difference in tyre wear between different operating points.

According to a third aspect of the disclosure, there is provided a computer-implemented method for determining a difference in tyre wear between a first operating point of a vehicle and a second operating point of a vehicle, the method comprising acquiring, by processing circuitry of a computer system, a first lateral tyre force for at least one wheel of the vehicle associated with the first operating point, acquiring, by the processing circuitry, a second lateral tyre force for at least one wheel of the vehicle associated with the second operating point, comparing, by the processing circuitry, the first lateral tyre force and the second lateral tyre force, and, if there is a difference between the first lateral tyre force and the second lateral tyre force, determining, by the processing circuitry, that a tyre wear associated with the first operating point is different from a tyre wear associated with the second operating point, wherein a slip angle of the at least one wheel associated with the first operating point is substantially the same as a slip angle of the at least one wheel associated with the second operating point.

The third aspect of the disclosure may seek to provide a solution for determining a difference in tyre wear between different operating points. A technical benefit may include the indication of a change in tyre wear from past or expected values, which can enable improved operation of vehicles that travel the route in the near future. Further technical benefits may include streamlining of operations by eliminating the need for additional infrastructure or equipment, such as embedded tyre sensors, thereby providing a more efficient and user-friendly alternative to cumbersome prior art approaches.

According to a fourth aspect of the disclosure, there is provided a computer program product comprising program code for performing, when executed by processing circuitry, the computer-implemented method of the third aspect. A technical benefit may include that new vehicles and/or legacy vehicles may be conveniently configured, by software installation/update, to determine a difference in tyre wear between different operating points.

According to a fifth aspect of the disclosure, there is provided a non-transitory computer-readable storage medium comprising instructions, which when executed by processing circuitry, cause the processing circuitry to perform the computer-implemented method of the third aspect. A technical benefit may include that new vehicles and/or legacy vehicles may be conveniently configured, by software installation/update, to determine a difference in tyre wear between different operating points.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

FIG. 1 schematically shows a top-view of a vehicle, according to an example.
FIG. 2 is a plot of normalised lateral tyre force against slip angle for different degrees of tyre wear, according to an example.
FIG. 3 is a flow chart of an example computer-implemented method according to an example.
FIG. 4 is a plot of lateral tyre force against slip angle for different operating points, according to an example.
FIG. 5 is a schematic diagram of an exemplary computer system for implementing examples disclosed herein, according to an example.

Like reference numerals refer to like elements throughout the description.

**DETAILED DESCRIPTION**

The detailed description set forth below provides information and examples of the disclosed technology with sufficient detail to enable those skilled in the art to practice the disclosure.

In many vehicle operations, friction between the tyres of a vehicle and the surface on which the vehicle is travelling is crucial to safe transport. One factor that affects such friction is tyre wear. Tyre wear can be estimated using sensors embedded in the tyres, or by an operator physically measuring the tread depth of the tyre at certain intervals. However, these approaches are cumbersome and require extra infrastructure or equipment, especially if the tyre wear is to be monitored at regular intervals.

To remedy this, systems, methods and other approaches are provided for determining a difference in tyre wear between a first operating point of a vehicle and a second operating point of a vehicle by comparing lateral tyre forces. This enables a change in tyre wear to be determined and taken into account when controlling vehicles, for example by adjusting the velocity or the tyre pressure of the vehicle appropriately to ensure safe and efficient operation of the vehicle. This is particularly useful for autonomous vehicles or vehicles that travel the same route repeatedly.

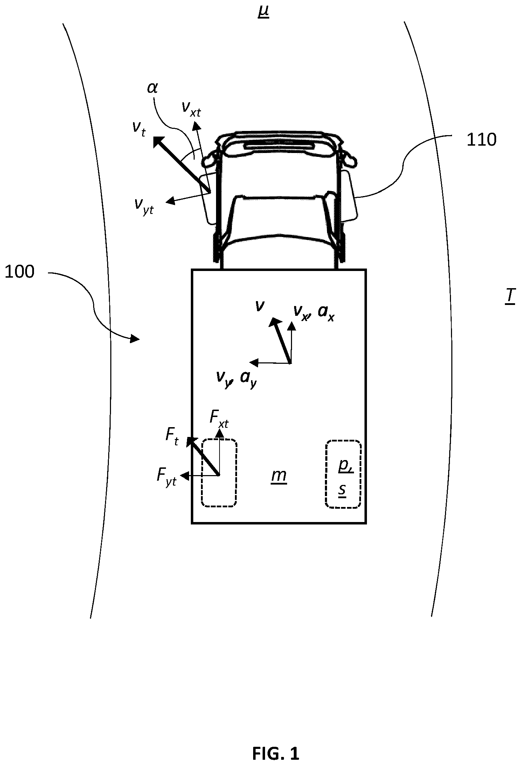

FIG. 1 schematically shows a top-view of an example vehicle 100 of the type considered in this disclosure. The vehicle 100 shown in FIG. 1 is an example of a truck, however the systems and methods disclosed herein can be used with any suitable form of vehicle 100. For example, the disclosure can be applied in heavy-duty vehicles, such as trucks, buses, and construction equipment, in personal vehicles such as cars, vans, or motorbikes, or in any other suitable form of vehicle. In some examples, the vehicle 100 may be a vehicle combination comprising a number of units, including a tractor unit and at least one trailing unit.

In the example of FIG. 1, the vehicle 100 is shown travelling on a curved path. FIG. 1 shows the relevant parameters of the vehicle 100. Examples of parameters of the vehicle 100 may include, for example, a mass $m$, a velocity $v$, including a longitudinal velocity $v_x$ and a lateral velocity $v_y$, a longitudinal acceleration $a_x$, and a lateral acceleration $a_y$.

FIG. 1 also shows the relevant parameters of the wheels (or indeed tyres) 110 of the vehicle 100. The wheels (or tyres) 110 of the vehicle produce a tyre force $F_t$ on the road when in motion. The tyre force $F_t$ can be considered as comprising two components: a longitudinal tyre force $F_{xt}$ and a lateral tyre force $F_{yt}$. The tyres 110 each have a tyre pressure $p$ and a cornering stiffness s. The cornering stiffness $s$ is the force generated per degree of slip angle (N/°). For a given slip angle, a tyre with a higher cornering stiffness will produce a greater lateral tyre force $F_{yt}$ and therefore a greater lateral acceleration.

When the vehicle 100 is in motion, the wheels (or indeed tyres) 110 of the vehicle 100 experience slip. Slip can be expressed as the slip on the vehicle 100 as a whole, or the slip on a given wheel 110, and can be divided into longitudinal and lateral slip. These parameters are known in the art, and not discussed in detail here. However, it is noted that the slip angle $\alpha$ for a given wheel 110, i.e. the angle between the longitudinal dimension of the wheel 110 (the direction in which the wheel 110 is pointing) and the traveling direction of the wheel 110, can be defined as:

$$\alpha = arctan\left(\frac{v_{yt}}{v_{xt}}\right)$$

where $v_{xt}$ is the longitudinal velocity of the wheel 110, and $v_{yt}$ is the lateral velocity of the wheel 110. The slip angle may also be known as the side slip angle.

FIG. 1 also shows the relevant parameters of the environment in which the vehicle 100 is travelling. In particular, there is an ambient temperature $T$ and a surface friction $\mu$. Whilst a curved path is shown in FIG. 1, it will be appreciated that the approaches disclosed herein are applicable to any situation where some lateral tyre force is present, including straight-line driving (for example when there is a lateral slope on the road).

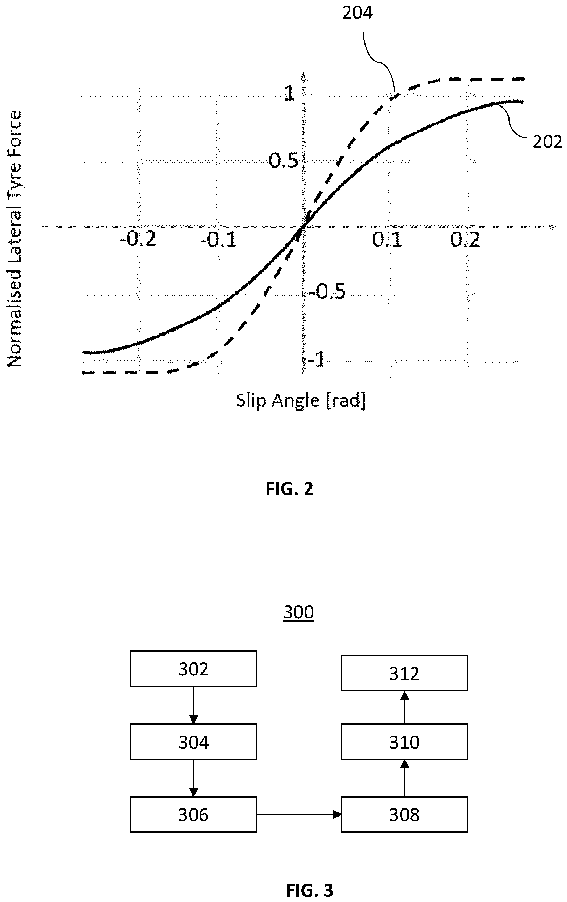

In general, the lateral tyre force $F_{yt}$ changes as the slip angle $\alpha$ changes. An example of this is shown in FIG. 2, which shows the evolution of normalised lateral tyre force $F_{yt\_norm}$ with slip angle $\alpha$ for a particular type of tyre. The solid line 202 shows the evolution for an unworn tyre, while the dashed line 204 shows the evolution for a worn tyre (for example a reduced but legal tread depth). As can be seen from FIG. 2, the lateral tyre force $F_{yt}$ for a given slip angle $\alpha$ is different for the unworn and worn tyres. For example, for a slip angle $\alpha$ of 0.1 rad, the unworn tyre has a normalised lateral tyre force $F_{yt\_norm}$ of around 0.6, while the worn tyre has a normalised lateral tyre force $F_{yt\_norm}$ of around 0.9. It will be appreciated that different values will be relevant for different plots of normalised lateral tyre force $F_{yt\_norm}$ against slip angle $\alpha$, which are dependent on certain vehicle and tyre parameters. Based on the concepts illustrated by the plots shown in **FIG. 2,** it is possible to investigate tyre wear of a tyre **110** by assessing the lateral tyre force $F_{yt}$ produced for a given slip angle $\alpha$.

As discussed above, the cornering stiffness $s$ is the force generated per degree of slip angle (N/°). As such, the cornering stiffness s of a tyre **110** can be determined from a force-slip angle plot such as that in **FIG. 2.** It is noteworthy that the gradients of the plots **202, 204** are substantially constant at low slip angles, where the evolution of lateral tyre force with slip angle is approximately linear. The cornering stiffness s of a tyre **110** can be given by the gradient of the plots **202, 204** (i.e. the rate of lateral tyre force to slip angle) in these linear zones. It is noted that the cornering stiffness is usually given as force per degree (N/°). However, the plot of **FIG. 2** is the evolution of normalised lateral tyre force $F_{yt\_norm}$ with slip angle $\alpha$ in radians. Therefore, as both variable are unitless, a cornering stiffness $s$ determined based on **FIG. 2** would also be unitless.

**FIG. 3** is a flow chart of an example computer-implemented method **300** for determining a difference in tyre wear between a first operating point of a vehicle and a second operating point of a vehicle according to an example. The method **300** may be performed by a control system of a vehicle, for example the vehicle **100** shown in the example of **FIG. 1.** The control system may be implemented on-board the vehicle, remotely from the vehicle, or a combination of the two.

In the following, an operating point for a vehicle is described by or associated with one or more variables. For example, an operating point may be described by or associated with one or more of a location, time, vehicle, or position on the vehicle. An operating point may also be described by parameters of the vehicle. For example, an operating point may be described by or associated with a mass $m$ of the vehicle **100,** a longitudinal velocity $v_x$ of the vehicle **100,** a lateral velocity $v_y$ of the vehicle **100,** a lateral acceleration $a_y$ of the vehicle **100,** a tyre type, a tyre pressure $p$, an ambient temperature $T,$ and/or road friction $\mu$. In particular, an operating point may be described by or associated with a slip angle $\alpha$ of a wheel, as will be discussed below.

At **302,** a first lateral tyre force $F_{yt,1}$ for at least one wheel **110** of a vehicle **100** associated with a first operating point is acquired. For example, the first lateral tyre force $F_{yt,1}$ is acquired for a particular wheel **110** of a vehicle **100** travelling along a particular section of a route at a particular time. The first lateral tyre force $F_{yt,1}$ may be determined by and/or received from a tyre force estimator of the vehicle **100.** Such estimators are known in the art

and not discussed in detail here.

The first lateral tyre force $F_{yt,1}$ may be acquired along with other parameters of the vehicle **100** associated with the first operating point. The other parameters may include, for example, a mass of the vehicle **100,** a longitudinal velocity $v_x$ of the vehicle **100,** a lateral velocity $v_y$ of the vehicle **100,** a longitudinal acceleration $a_x$ of the vehicle **100,** a lateral acceleration $a_y$ of the vehicle **100,** a tyre type of the wheel **110,** a tyre pressure $p$ of the wheel **110,** an ambient temperature $T$, and/or road friction $\mu$.

In some examples, the data may include a slip angle $\alpha$ of the wheel **110** associated with the first operating point. For example, the slip angle may be reported directly from the vehicle **100** or a computer model. In some examples, the slip angle $\alpha$ may be determined based on the longitudinal velocity $v_{xw}$ and the lateral velocity $v_{yw}$ of the wheel **110,** as discussed above. In some examples, the slip angle $\alpha$ may be determined directly from a steering angle of the vehicle **100** using a suitable estimator.

At **304,** a second lateral tyre force $F_{yt,2}$ for at least one wheel **110** of a vehicle **100** associated with a second operating point is acquired. For example, the second lateral tyre force $F_{yt,2}$ is acquired for a particular wheel **110** of a vehicle **100** travelling along a particular section of a route at a particular time. The second lateral tyre force $F_{yt,2}$ may be determined by and/or received from a tyre force estimator of the vehicle **100.** Such estimators are known in the art and not discussed in detail here. Similarly to the first lateral tyre force $F_{yt,1}$ the second lateral tyre force $F_{yt,2}$ may be acquired along with other parameters of the vehicle **100** associated with the second operating point.

In some examples, the first operating point and the second operating point are associated with the same section of a route. For example, the first and second data may be associated with the same road section, e.g. a particular curve on a particular road. This may enable a robust comparison between operating points as the same or similar travel conditions are used. The operating point may be for a vehicle **100** travelling along the road section at a first time, and the second operating point may be for the same vehicle **100** travelling along the road section at a second time. The second time may be earlier or later than the first time. Alternatively, the first operating point may be for a first vehicle **100,** while the second operating point may be for a different vehicle **100** travelling along the same road section at a different time. This may enable the performance of a tyre over its lifetime to be assessed.

In some examples, the first operating point and the second operating point are associated with different sections of a route. For example, the first and second operating points may be associated with different road sections, e.g. curves on different roads or different curves on the same road. The first operating point may be for a vehicle **100** travelling along one road section, and the second operating point is for the same vehicle **100** travelling along a different road section. Alternatively, the first operating point may be for a first vehicle **100** travelling along one road section, while the second operating point is for a different vehicle **100** travelling along a different road section. This enables a broader amount of data to be used to monitor tyre wear.

As discussed in relation to **FIG. 1,** each operating point may correspond to a curved path. However, it will be appreciated that the approaches disclosed herein are applicable to any situation where some lateral tyre force is present, including straight-line driving.

In some examples, the first and second operating points may be associated with different wheels **110** of the same vehicle **100**. For example, the first operating point corresponds to a left side wheel **110** of a vehicle **100,** and the second operating point corresponds to a right side wheel **110** of the vehicle **100**. This could be used, for example, to compare tire wear on a single axle of the vehicle **100.**

Whilst these different scenarios are possible for the first and second operating points, in order to make a robust and reliable comparison between them, it is important that a slip angle $\alpha_1$ of the wheel **110** associated with the first operating point is substantially the same as slip angle $\alpha_2$ of the wheel **110** associated with the second operating point. This will ensure that the lateral tyre forces $F_{yt}$ acting on the wheels **110** are sufficiently similar to make a relevant comparison.

To ensure this, it may be desirable that slip angle $\alpha_1$ of the wheel **110** associated with the first operating point is within a threshold of the slip angle $\alpha_2$ of the wheel **110** associated with the second operating point, or vice versa. This may provide a simple way to ensure slip angles are sufficiently similar. For example, it may be desirable that the slip angle $\alpha_1$ of the wheel **110** associated with the first operating point is within a certain percentage of the slip angle $\alpha_2$ of the wheel **110** associated with the second operating point, for example up to $\pm10\%$. This may enable larger thresholds to be used for larger slip angles, where larger lateral forces are at play. In some examples, it may be desirable that the slip angles are within a certain percentage of each other. In other examples, the threshold can be an absolute threshold, for example up to $\pm0.5°$.

In some examples, when the slip angles are not within a threshold of each other, one set of data acquired at **302** or **304** may be processed at **306** in order to bring the slip angles in line. For example, one set of data may be extrapolated such that the slip angles are substantially the same. For example, a look up table approach can be used to extrapolate the lateral tyre force $F_{yt}$ when the loading of the vehicle, vehicle type and/or other parameters are considerably different between the first and second sets of data. This may be particularly applicable in the linear part of the plots **202, 204** of **FIG. 2** (i.e. for smaller slip angles), where extrapolation is reliable and straightforward. In a nonlinear zone, a tyre model may be used. The resulting lateral tyre forces $F_{yt}$ can then be used in step **308**.

In some examples, in order to provide the most reliable comparison between lateral tyre forces $F_{yt}$, further parameters associated with the first and second operating points that may affect the lateral tyre force $F_{yt}$ of a wheel **110** may also need to be similar or the same. For example, loading of the vehicle **100** or tyre wear may affect how the lateral tyre force $F_{yt}$ develops. Therefore, it may be desirable that at least one of mass $m$ of the vehicle **100,** a longitudinal velocity $v_x$ of the vehicle **100,** a lateral velocity $v_y$ of the vehicle **100,** a lateral acceleration $a_y$ of the vehicle **100,** a tyre type, a tyre pressure $p,$ an ambient temperature $T,$ and/or road friction $\mu$ is substantially constant between the first and second operating points. It may be considered that the tyre pressure $p,$ which affects cornering stiffness directly, is the most desirable to be constant between the first and second operating points. For example, it may be desirable that at least one of the parameters associated with the first operating point is within a threshold of the corresponding parameter for the second operating point, or vice versa. The threshold may be a percentage or an absolute value.

At **308,** the first lateral tyre force $F_{yt,1}$ and the second lateral tyre force $F_{yt,2}$ are compared. For example, it may be determined if the first lateral tyre force $F_{yt,1}$ is within a threshold of the second lateral tyre force $F_{yt,2},$ or vice versa. The threshold may be a percentage or an absolute value. In the case that a threshold was used to compare the slip angles of the first and second data, corresponding thresholds may be used for the corresponding lateral tyre forces.

At **310,** upon there being a difference between the first lateral tyre force $F_{yt,1}$ and the second lateral tyre force $F_{yt,2},$ it is determined that a tyre wear associated with the first operating point is different from a tyre wear associated with the second operating point. This is because it can be concluded that, for cases with similar slip angle, any difference in lateral tyre force will be due to a difference in tyre wear.

Depending on the stage of life the tyre **110** is in, it can be determined how the tyre wear differs based on the difference in lateral tyre force. For some tyre types, the lateral tyre force produced for a given slip angle may increase as the tyre wear increases, at least in an early part of the life the tyre **110**. In such an example, if the first lateral tyre force $F_{yt,1}$ is larger than the second lateral tyre force $F_{yt,2},$ it can be determined that the tyre wear associated with the first operating point is higher than the tyre wear associated with the second operating point.

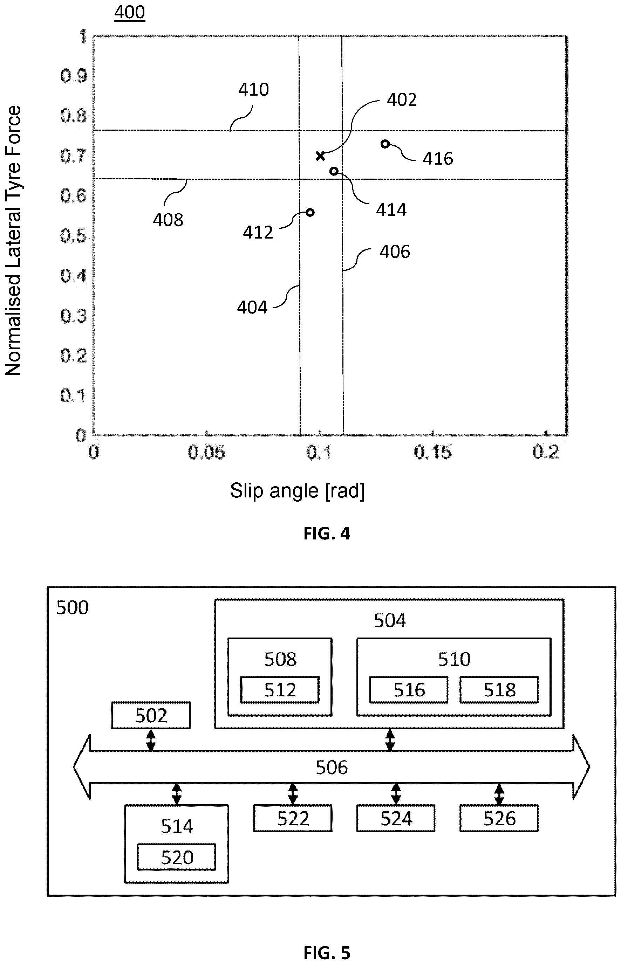

An example is shown in **FIG. 4,** which is a plot **400** of normalised lateral tyre force against slip angle. The plot **400** shows a first example operating point **402**. The first operating point **402** has a slip angle of 0.1 radians. In this example, a threshold of $\pm10\%$ is applied, meaning a lower threshold **404** is set at 0.09 radians and an upper threshold **406** set at 0.11 radians. Therefore, for a second operating point to be considered for a comparison of slip angles, it would need to have a slip angle between 0.09 and 0.11 radians. The lateral tyre forces can then be compared to determine if there is a difference. In some examples, similar thresholds can be used to determine if the lateral tyre forces are sufficiently similar or different for a conclusion to be made. For example, as the first operating point **402** has a normalised lateral tyre force of 0.7, a threshold of ±10% results in a lower threshold **408** set at 0.63 and an upper threshold **410** set at 0.77. Therefore, for the normalised lateral tyre force of a second operating point to be considered sufficiently different from the first operating point **402,** it would need to be outside the range of 0.63 to 0.77.

Three further example operating points **412, 414, 416** are shown in **FIG. 4**. The operating point **412** has a slip angle of 0.095 radians, meaning it is inside the threshold for slip angle and can be used for comparison (it should be noted that, applying a threshold of ±10% to the operating point **412** gives values of 0.0855 and 0.1045, meaning that the first operating point **402** is also inside the threshold for the slip angle of the operating point **412**). The operating point **412** has a normalised lateral tyre force of 0.57, which is outside the lateral tyre force threshold of the first operating point **402,** meaning it is concluded that the associated tyre wear is different to that of the first operating point **402.**

The operating point **414** has a slip angle of 0.105 radians, meaning it is inside the threshold for slip angle and can be used for comparison (it should be noted that, applying a threshold of ±10% to the operating point **414** gives values of 0.0945 and 0.1155, meaning that the first operating point **402** is also inside the threshold for the slip angle of the operating point **414**). The operating point **414** has a normalised lateral tyre force of 0.67, which is inside the threshold for lateral force of the first operating point **402,** meaning it cannot be concluded that the associated tyre wear is different to that of the first operating point **402** as there is no significant difference in lateral tyre force.

The operating point **416** has a slip angle of 0.13 radians, meaning it is outside the threshold for slip angle, and therefore not considered useful for comparison to the first operating point **402.** As discussed in relation to step **306** of the method **300,** the set of data relating to the operating point **416** may be processed at **306** in order to bring the slip angles in line. For example, the set of data relating to the operating point **416** may be extrapolated such that the slip angle is substantially the same as that of the first operating point **402,** such that a relevant comparison of lateral tyre forces can be made.

Returning to FIG. 3, at **312,** an action can be taken based on the determination at step **310.** For example, a vehicle might be travelling at pre-defined speeds along a GPS tracked route. Data corresponding to a fully inflated tyre (or an optimal tyre pressure *p*) can be used as reference. The reference may be based on a new tyre on a dry road. Any suitable reference date could be determined, for example by comparing a number of different experimental test results. The reference data can be stored, for example, in look-up table stored in the vehicle's electronic control unit and the instantaneous lateral tyre force of the tyres can be compared to the stored values to track the tire wear. Any differences in tyre wear can be determined and suitable action can be applied. In some examples, the velocity v of the vehicle **100** may be adjusted to compensate for a different tyre wear. In some examples, the steering angle to steer the vehicle **100** may be adjusted to provide the appropriate lateral acceleration $a_y$. For example, a smaller steering angle may be applied to negotiate the same curve. In some examples, a fleet management system can observe the tyre wear remotely and determine a plan for maintenance and/or a change of tyres. In some examples, the tyre pressure of the wheel **110** may be adjusted to bring it back to a more optimal level, for example increased or decreased to obtain a desired cornering stiffness s.

**FIG. 5** is a schematic diagram of a computer system **500** for implementing examples disclosed herein. In particular, the computer system **500** may, according to some examples, be configured to cause performance of the method **300** of **FIG. 3** and/or to be comprised in a control unit of the vehicle **100**. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (500) for determining a difference in tyre wear between a first operating point (402, 412, 414, 416) of a vehicle (100) and a second operating point (402, 412, 414, 416) of a vehicle (100), the computer system (500) comprising processing circuitry configured to: acquire a first lateral tyre force $F_{yt,1}$ for at least one wheel of the vehicle (100) associated with the first operating point (402, 412, 414, 416); acquire a second lateral tyre force $F_{yt,2}$ for at least one wheel (110) of the vehicle (100) associated with the second operating point (402, 412, 414, 416); compare the first lateral tyre force $F_{yt,1}$ and the second lateral tyre force $F_{yt,2}$; and upon there being a difference between the first lateral tyre force $F_{yt,1}$ and the second lateral tyre force $F_{yt,2}$, determine that a tyre wear associated with the first operating point (402, 412, 414, 416) is different from a tyre wear associated with the second operating point (402, 412, 414, 416); wherein a slip angle $\alpha_1$ of the at least one wheel (110) associated with the first operating point (402, 412, 414, 416) is substantially the same as a slip angle $\alpha_2$ of the at least one wheel (110) associated with the second operating point (402, 412, 414, 416).

Example 2: The computer system (500) of example 1, wherein the slip angle $\alpha_1$ of the at least one wheel (110) associated with the first operating point (402, 412, 414, 416) is within a threshold (404, 406) of the slip angle $\alpha_2$ of the at least one wheel (110) associated with the second operating point (402, 412, 414, 416).

Example 3: The computer system (500) of any preceding claim, wherein at least one of a mass $m$ of the vehicle (100), a longitudinal velocity $v_x$ of the vehicle (100), a lateral velocity $v_y$ of the vehicle (100), a lateral acceleration $a_y$ of the vehicle (100), a tyre type, a tyre pressure $p$, an ambient temperature $T$, and/or road friction $\mu$ is substantially constant between the first operating point (402, 412, 414, 416) and the second operating point (402, 412, 414, 416).

Example 4: The computer system (500) of any preceding claim, wherein the first operating point (402, 412, 414, 416) and the second operating point (402, 412, 414, 416) are associated with the same section of a route.

Example 5: The computer system (500) of any preceding claim, wherein the first operating point (402, 412, 414, 416) and the second operating point (402, 412, 414, 416) correspond to a curved path.

Example 6: The computer system (500) of any preceding claim, wherein the first operating point (402, 412, 414, 416) corresponds to a left side wheel (110) of a vehicle (100), and the second operating point (402, 412, 414, 416) corresponds to a right side wheel (110) of the vehicle (100).

Example 7: The computer system (500) of any preceding claim, wherein the first operating point (402, 412, 414, 416) corresponds to a first time, and the second operating point (402, 412, 414, 416) corresponds to a second time later than the first time.

Example 8: The computer system (500) of any preceding claim, wherein the processing circuitry is configured to receive the first lateral tyre force $F_{yt,1}$ and/or the second lateral tyre force $F_{yt,2}$ from a tyre force estimator.

Example 9: The computer system (500) of any preceding claim, the processing circuitry is further configured to process acquired data such that the slip angle $\alpha_1$ of the at least one wheel (110) associated with the first operating point (402, 412, 414, 416) is substantially the same as slip angle $\alpha_2$ of the at least one wheel (110) associated with the second operating point (402, 412, 414, 416).

Example 10: The computer system (500) of any preceding claim, wherein the processing circuitry is further configured to determine that the tyre wear associated with the first operating point (402, 412, 414, 416) is higher than the tyre wear associated with the second operating point (402, 412, 414, 416) if the first lateral tyre force $F_{yt,1}$ is larger than the second lateral tyre force $F_{yt,2}$.

Example 11: The computer system (500) of any preceding claim, wherein the processing circuitry is further configured to adjust the velocity $v$ of a vehicle (100) or the tyre pressure $p$ of a wheel (110) based on a determination that the tyre wear associated with the first operating point (402, 412, 414, 416) is different from the tyre wear associated with the second operating point (402, 412, 414, 416).

Example 12: A vehicle (100) comprising the computer system (500) of any preceding example.

Example 13: A computer-implemented method (300) for determining a difference in tyre wear between a first operating point (402, 412, 414, 416) of a vehicle (100) and a second operating point (402, 412, 414, 416) of a vehicle (100), the method comprising: acquiring (302), by processing circuitry of a computer system (500), a first lateral tyre force $F_{yt,1}$ for at least one wheel (110) of the vehicle (100) associated with the first operating point (402, 412, 414, 416); acquiring (304), by the processing circuitry, a second lateral tyre force $F_{yt,2}$ for at least one wheel (110) of the vehicle (100) associated with the second operating point (402, 412, 414, 416); comparing (308), by the processing circuitry, the first lateral tyre force $F_{yt,1}$ and the second lateral tyre force $F_{yt,2}$, and if there is a difference between the first lateral tyre force $F_{yt,1}$ and the second lateral tyre force $F_{yt,2}$, determining (310), by the processing circuitry, that a tyre wear associated with the first operating point (402, 412, 414, 416) is different from a tyre wear associated with the second operating point (402, 412, 414, 416); wherein a slip angle $\alpha_1$ of the at least one wheel (110) associated with the first operating point (402, 412, 414, 416) is substantially the same as a slip angle $\alpha_2$ of the at least one wheel (110) associated with the second operating point (402, 412, 414, 416).

Example 14: The computer-implemented method (300) of example 13, wherein the slip angle $\alpha_1$ of the at least one wheel (110) associated with the first operating point (402, 412, 414, 416) is within a threshold (404, 406) of the slip angle $\alpha_2$ of the at least one wheel (110) associated with the second operating point (402, 412, 414, 416).

Example 15: The computer-implemented method (300) of example 13 or 14, wherein at least one of a mass $m$ of the vehicle (100), a longitudinal velocity $v_x$ of the vehicle (100), a lateral velocity $v_y$ of the vehicle (100), a lateral acceleration $a_y$ of the vehicle (100), a tyre type, a tyre pressure $p$, an ambient temperature $T$, and/or road friction $\mu$ is substantially constant between the first operating point (402, 412, 414, 416) and the second operating point (402, 412, 414, 416).

Example 16: The computer-implemented method (300) of any of examples 13 to 15, wherein the first operating point (402, 412, 414, 416) and the second operating point (402, 412, 414, 416) are associated with the same section of a route.

Example 17: The computer-implemented method (300) of any of examples 13 to 16, wherein the first operating point (402, 412, 414, 416) and the second operating point (402, 412, 414, 416) correspond to a curved path.

Example 18: The computer-implemented method (300) of any of examples 13 to 17, wherein the first operating point (402, 412, 414, 416) corresponds to a left side wheel (110) of a vehicle (100), and the second operating point (402, 412, 414, 416) corresponds to a right side wheel (110) of the vehicle (100).

Example 19: The computer-implemented method (300) of any of examples 13 to 18, wherein the first operating point (402, 412, 414, 416) corresponds to a first time, and the second operating point (402, 412, 414, 416) corresponds to a second time later than the first time.

Example 20: The computer-implemented method (300) of any of examples 13 to 19, comprising receiving, by the processing circuitry, the first lateral tyre force $F_{yt,1}$ and/or the second lateral tyre force $F_{yt,2}$ from a tyre force estimator.

Example 21: The computer-implemented method (300) of any of examples 13 to 20, comprising processing (306), by the processing circuitry, acquired data such that the slip angle $\alpha_1$ of the at least one wheel (110) associated with the first operating point (402, 412, 414, 416) is substantially the same as slip angle $\alpha_2$ of the at least one wheel (110) associated with the second operating point (402, 412, 414, 416).

Example 22: The computer-implemented method (300) of any of examples 13 to 21, comprising determining, by the processing circuitry, that the tyre wear associated with the first operating point (402, 412, 414, 416) is higher than the tyre wear associated with the second operating point (402, 412, 414, 416) if the first lateral tyre force $F_{yt,1}$ is larger than the second lateral tyre force $F_{yt,2}$.

Example 23: The computer-implemented method (300) of any of examples 13 to 22, comprising adjusting (312), by the processing circuitry, the velocity v of a vehicle (100) or the tyre pressure $p$ of a wheel (110) based on a determination that the tyre wear associated with the first operating point (402, 412, 414, 416) is different from the tyre wear associated with the second operating point (402, 412, 414, 416).

Example 24: A computer program product comprising program code for performing, when executed by processing circuitry, the computer-implemented method (300) of any of examples 13 to 23.

Example 25: A non-transitory computer-readable storage medium comprising instructions, which when executed by processing circuitry, cause the processing circuitry to perform the computer-implemented method (300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for determining a difference in tyre wear between a first operating point (402, 412, 414, 416) of a vehicle (100) and a second operating point (402, 412, 414, 416) of a vehicle (100), the computer system (500) comprising processing circuitry (502) configured to:

   acquire a first lateral tyre force $F_{yt,1}$ for at least one wheel of the vehicle (100) associated with the first operating point (402, 412, 414, 416);
   acquire a second lateral tyre force $F_{yt,2}$ for at least one wheel (110) of the vehicle (100) associated with the second operating point (402, 412, 414, 416);
   compare the first lateral tyre force $F_{yt,1}$ and the second lateral tyre force $F_{yt,2}$; and
   upon there being a difference between the first lateral tyre force $F_{yt,1}$ and the second lateral tyre force $F_{yt,2}$, determine that a tyre wear associated with the first operating point (402, 412, 414, 416) is different from a tyre wear associated with the second operating point (402, 412, 414, 416);
   wherein a slip angle $\alpha_1$ of the at least one wheel (110) associated with the first operating point (402, 412, 414, 416) is substantially the same as a slip angle $\alpha_2$ of the at least one wheel (110) associated with the second operating point (402, 412, 414, 416).

2. The computer system (500) of claim 1, wherein the slip angle $\alpha_1$ of the at least one wheel (110) associated with the first operating point (402, 412, 414, 416) is within a threshold (404, 406) of the slip angle $\alpha_2$ of the at least one wheel (110) associated with the second operating point (402, 412, 414, 416).

3. The computer system (500) of any preceding claim, wherein at least one of a mass $m$ of the vehicle (100), a longitudinal velocity $v_x$ of the vehicle (100), a lateral velocity $v_y$ of the vehicle (100), a lateral acceleration $a_y$ of the vehicle (100), a tyre type, a tyre pressure $p$, an ambient temperature $T$, and/or a road friction $\mu$ is substantially constant between the first operating point (402, 412, 414, 416) and the second operating point (402, 412, 414, 416).

4. The computer system (500) of any preceding claim, wherein the first operating point (402, 412, 414, 416) and the second operating point (402, 412, 414, 416) are associated with the same section of a route.

5. The computer system (500) of any preceding claim, wherein the first operating point (402, 412, 414, 416) and the second operating point (402, 412, 414, 416) correspond to a curved path.

6. The computer system (500) of any preceding claim, wherein the first operating point (402, 412, 414, 416) corresponds to a left side wheel (110) of a vehicle (100), and the second operating point (402, 412, 414, 416) corresponds to a right side wheel (110) of the vehicle (100).

7. The computer system (500) of any preceding claim, wherein the first operating point (402, 412, 414, 416) corresponds to a first time, and the second operating point (402, 412, 414, 416) corresponds to a second time later than the first time.

8. The computer system (500) of any preceding claim, wherein the processing circuitry (502) is configured to acquire the first lateral tyre force $F_{yt,1}$ and/or the second lateral tyre force $F_{yt,2}$ from a tyre force estimator.

9. The computer system (500) of any preceding claim, the processing circuitry (502) is further configured to process acquired data such that the slip angle $\alpha_1$ of the at least one wheel (110) associated with the first operating point (402, 412, 414, 416) is substantially the same as the slip angle $\alpha_2$ of the at least one wheel (110) associated with the second operating point (402, 412, 414, 416).

10. The computer system (500) of any preceding claim, wherein the processing circuitry (502) is further configured to determine that the tyre wear associated with the first operating point (402, 412, 414, 416) is higher than the tyre wear associated with the second operating point (402, 412, 414, 416) if the first lateral tyre force $F_{yt,1}$ is larger than the second lateral tyre force $F_{yt,2}$.

11. The computer system (500) of any preceding claim, wherein the processing circuitry (502) is further configured to adjust the velocity v of a vehicle (100) or the tyre pressure $p$ of a wheel (110) based on a determination that the tyre wear associated with the first operating point (402, 412, 414, 416) is different from the tyre wear associated with the second operating point (402, 412, 414, 416).

12. A vehicle (100) comprising the computer system (500) of any preceding claim.

13. A computer-implemented method (300) for determining a difference in tyre wear between a first operating point (402, 412, 414, 416) of a vehicle (100) and a second operating point (402, 412, 414, 416) of a vehicle (100), the method comprising:

    acquiring (302), by processing circuitry (502) of a computer system (500), a first lateral tyre force $F_{yt,1}$ for at least one wheel (110) of the vehicle (100) associated with the first operating point (402, 412, 414, 416);
    acquiring (304), by the processing circuitry (502), a second lateral tyre force $F_{yt,2}$ for at least one wheel (110) of the vehicle (100) associated with the second operating point (402, 412, 414, 416);
    comparing (308), by the processing circuitry (502), the first lateral tyre force $F_{yt,1}$ and the second lateral tyre force $F_{yt,2}$; and
    if there is a difference between the first lateral tyre force $F_{yt,1}$ and the second lateral tyre force $F_{yt,2}$, determining (310), by the processing circuitry (502), that a tyre wear associated with the first operating point (402, 412, 414, 416) is different from a tyre wear associated with the second operating point (402, 412, 414, 416);
    wherein a slip angle $\alpha_1$ of the at least one wheel (110) associated with the first operating point (402, 412, 414, 416) is substantially the same as a slip angle $\alpha_2$ of the at least one wheel (110) associated with the second operating point (402, 412, 414, 416).

14. A computer program product comprising program code for performing, when executed by processing circuitry, the computer-implemented method (300) of claim 13.

15. A non-transitory computer-readable storage medium comprising instructions, which when executed by processing circuitry, cause the processing circuitry to perform the computer-implemented method (300) of claim 13.

**FIG. 1**

**FIG. 2**

300

**FIG. 3**

FIG. 4

FIG. 5

## EUROPEAN SEARCH REPORT

**Application Number**

EP 23 21 8247

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/113494 A1 (SINGH KANWAR BHARAT [US] ET AL) 27 April 2017 (2017-04-27) * paragraphs [0004] – [0006], [0048] – [0078]; figures 1-11 * | 1-15 | INV. B60C11/24 B60W40/101 |
| A | CN 112 644 229 A (YIBIN COWIN AUTOMOBILE CO LTD) 13 April 2021 (2021-04-13) * see the enclosed translation; figure 1 * | 1-15 | |
| A | JP 2009 149246 A (BRIDGESTONE CORP) 9 July 2009 (2009-07-09) * paragraph [0028] – paragraph [0163]; figures * | 1-15 | |
| A | WO 2022/214175 A1 (VOLVO TRUCK CORP [SE]) 13 October 2022 (2022-10-13) * page 5, line 14 – page 28, line 30; figures 1-8 * | 1-15 | |
| A | US 2021/155251 A1 (ARAT MUSTAFA ALI [LU] ET AL) 27 May 2021 (2021-05-27) * paragraph [0046] – paragraph [0079]; claims 1,12; figures 1-10 * | 1-15 | TECHNICAL FIELDS SEARCHED (IPC) B60C B60W |

The present search report has been drawn up for all claims

| Place of search | Date of completion of the search | Examiner |
|---|---|---|
| Munich | 6 May 2024 | Jung, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 8247

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | | Publication date | Patent family member(s) | | Publication date |
|---|---|---|---|---|---|
| US 2017113494 | A1 | 27-04-2017 | NONE | | |
| CN 112644229 | A | 13-04-2021 | NONE | | |
| JP 2009149246 | A | 09-07-2009 | NONE | | |
| WO 2022214175 | A1 | 13-10-2022 | CN | 117120278 A | 24-11-2023 |
| | | | EP | 4319990 A1 | 14-02-2024 |
| | | | JP | 2024517073 A | 19-04-2024 |
| | | | KR | 20230164080 A | 01-12-2023 |
| | | | WO | 2022214175 A1 | 13-10-2022 |
| US 2021155251 | A1 | 27-05-2021 | AU | 2020267207 A1 | 10-06-2021 |
| | | | BR | 102020023962 A2 | 13-07-2021 |
| | | | CN | 112829761 A | 25-05-2021 |
| | | | EP | 3825191 A1 | 26-05-2021 |
| | | | US | 2021155251 A1 | 27-05-2021 |

EPO FORM P0459

For more details about this annex : see Official Journal of the European Patent Office, No. 12/82